# FASCICULE DE BREVET EUROPEEN

(11) **EP 3 182 506 B1**
(45) Date de publication et mention de la délivrance du brevet: **15.05.2024**
(21) Numéro de dépôt: 16204047.1
(22) Date de dépôt: 14.12.2016
(51) Int. Cl.: H01Q 1/08, H01Q 1/12, H01Q 1/28, H01Q 1/48, H01Q 21/06

(54) **ANTENNE RADAR BASSE FRÉQUENCE AMÉLIORÉE**
VERBESSERTE NIEDRIGFREQUENZ-RADARANTENNE
IMPROVED LOW FREQUENCY RADAR ANTENNA

(30) Priorité: 14.12.2015 FR 1502588
(43) Date de publication de la demande: 21.06.2017
(73) Titulaire: Thales, 92400 Courbevoie (FR)
(72) Inventeur: GARREC, Patrick, 33608 PESSAC CEDEX (FR); MAMES, Jean-Yves, 33608 PESSAC CEDEX (FR); RENARD, Christian, 78851 ELANCOURT CEDEX (FR)
(74) Mandataire: Lavoix

(56) Documents cités:
- US-A1- 2008 278 386
- US-A1- 2010 231 479
- US-A1- 2014 125 508
- US-B2- 7 994 965

## Description

La présente invention a pour domaine celui des antennes radars basse fréquence pour la détection d'aéronefs, et plus particulièrement d'antennes radars basse fréquence du type comportant un réseau d'antennes élémentaires.

Une telle antenne est généralement réalisée à partir d'un réseau d'antennes élémentaires, par exemple des dipôles réalisés par un coaxial-colinéaire ou de type Yagi.

Le plan antennaire est parallèle à la surface terrestre et sa dimension est d'une centaine de mètre pour chacun des côtés du plan antennaire. L'angle solide du faisceau principal du diagramme de rayonnement de l'antenne est de l'ordre de 1 à 5°. La surface du plan d'antenne détermine la largeur du faisceau principal. Par exemple, pour une fréquence de fonctionnement de 50 MHz, le plan antennaire doit s'étendre sur une surface d'environ 70 mètres de côtés, si l'on veut une largeur de faisceau de 5°.

L'utilisation des bases fréquences en radar permet de lutter contre l'évolution des menaces, notamment en matière de furtivité des aéronefs. Cependant, la performance de ces antennes, en émission ou en réception, dépend de la direction de pointage du diagramme de rayonnement par rapport à la direction normale au plan antennaire.

Le diagramme de rayonnement est optimal en puissance, en largeur de faisceau et en directivité, lorsque la direction de pointage est perpendiculaire au plan antennaire, c'est-à-dire confondue avec la direction normale au plan antennaire.

Les performances de ce diagramme de rayonnement (puissance, largeur de faisceau, et directivité) se dégradent d'autant plus que la direction de pointage s'écarte de la direction normale et se rapproche du plan antennaire.

De plus, pour une direction de pointage donnée, le diagramme de rayonnement présente des performances qui décroissent globalement en fonction de l'angle entre la direction d'observation d'un objet et la direction de pointage. Or, les radars basse fréquence opérationnels connus, pourvus d'une antenne constituée par un réseau d'antennes élémentaires, possèdent un plan antennaire disposé à la surface terrestre, c'est-à-dire dans un plan sensiblement horizontal. La direction normale au plan antennaire est dans ce cas la verticale passant par le lieu d'implantation de l'antenne.

Compte tenu de ce qui précède, on comprend qu'il est alors difficile de détecter un aéronef qui est vue depuis l'antenne radar sous un angle d'élévation faible par rapport au plan horizontal, c'est-à-dire un aéronef proche situé à basse altitude ou un aéronef lointain situé à haute altitude.

En effet, une telle détection nécessite que la direction de pointage de l'antenne soit proche du plan antennaire, or, dans un tel usage, les performances de l'antenne radar sont réduites et la détection difficile, voire impossible. Ainsi, les radars connus présentent typiquement une capacité de détection à l'intérieur d'un cône de 45° de demie ouverture autour de la normale au plan de l'antenne radar. Les radars connus présentent donc une portée de détection relativement courte, puisque, pour pouvoir être détecté, l'aéronef doit entrer dans ce cône à la verticale de l'antenne.

Pour un angle de dépointage supérieur à 45°, les radars connus sont obligés d'avoir des puissances d'émission plus importantes.

Par ailleurs, il existe des radars très haute fréquence dont le plan antennaire est disposé verticalement et dont la direction de pointage peut être modifiée par rotation du réseau d'antennes élémentaires autour d'un axe vertical de pivotement. Par très hautes fréquences (VHF pour « Very High Frequency »), on entend la bande haute des basses fréquences, bande s'étendant entre 30 MHz et 300 MHz, soit entre 1 et 10 m en longueur d'onde.

Cependant, de tels radars sont difficiles à mettre en oeuvre et leur mobilité reste problématique, à cause notamment de la taille importante du plan antennaire.

Il y a donc un besoin de pouvoir détecter, en basse fréquence, les aéronefs avec une faible élévation, notamment pour augmenter la portée de détection.

Par ailleurs encore, par exemple du document US 7 994 965 B2, on connait un système antennaire comprenant un premier sous-système planaire, constitué d'émetteurs disposés dans un plan horizontal, et un sous-système linéaire, constitué de récepteurs disposés le long d'un mât vertical (avantageusement rétractable). Ce système antennaire, composé physiquement de deux sous-systèmes, se comporte théoriquement comme un système comportant une pluralité d'éléments émetteur/récepteur transitoires. La position de ces éléments transitoires correspond à la convolution du motif du sous-système planaire par le motif du sous-système linéaire. Pour obtenir ce réseau équivalent, il convient cependant d'utiliser ce système antennaire en mettant en oeuvre des techniques de « code division multiplexing », « time division multiplexing » ou encore de « cohérent multiple input - multiple output processing ».

Par ailleurs, le document US 7 994 965 B2 divulgue un système antennaire comprenant un premier sous-système planaire, constitué d'émetteurs disposés dans un plan horizontal, et un sous-système linéaire, constitué par des récepteurs disposés le long d'un mât vertical. Ce système antennaire, composé physiquement de deux sous-systèmes, se comporte théoriquement comme un système comportant une pluralité d'éléments émetteur/récepteur transitoires. La position de ces éléments transitoires correspond à la convolution du motif du sous-système planaire par celui du sous-système linéaire.

L'invention a donc pour but de résoudre les problèmes précités, en proposant notamment une alternative plus simple à mettre en oeuvre que le système antennaire présenté dans le document US 7 994 965 B2.

Pour cela l'invention a pour objet une antenne radar basse fréquence, comportant un réseau d'antennes élémentaires, propre à fonctionner à une fréquence de fonctionnement prédéfinie, caractérisée en ce qu'elle comporte un plan antennaire léger et souple, le plan antennaire comportant un plan rayonnant et un plan de masse, le plan rayonnant portant le réseau d'antennes élémentaires, le plan antennaire pouvant être déployé depuis un état replié vers un été déployé, dans lequel il adopte une conformation sensiblement perpendiculaire à la surface terrestre du sol ou de la mer

Suivant des modes particuliers de réalisation, l'antenne comporte une ou plusieurs des caractéristiques suivantes, prises isolément ou suivant toutes les combinaisons techniquement possibles :
- l'antenne comporte un dispositif de conformation propre à conférer au plan antennaire dans son état déployé une conformation optimale.
- l'antenne comporte un dispositif de mesure d'une déformation spatiale du plan antennaire par rapport à ladite conformation optimale, ladite déformation étant compensée lors de la génération d'une consigne de pointage d'un diagramme d'émission/réception de l'antenne.
- le dispositif de conformation comporte une pluralité de traverses d'espacement entre le plan rayonnant et le plan de masse, lesdites traverses d'espacement étant de préférence à fixation rapide.
- l'antenne comporte un dispositif de sustentation propre à soulever le plan antennaire de façon à le maintenir dans l'état déployé, le dispositif de sustentation étant de préférence un aérostat.
- le dispositif de sustentation comporte un moyen de propulsion, pour compenser un effet du vent sur le plan antennaire.
- le dispositif de sustentation est un aérostat, et l'antenne radar comporte en outre un dispositif de stockage de l'aérostat, comportant de préférence un système d'injection et de récupération du gaz utilisé pour gonfler une enveloppe de l'aérostat.
- l'antenne comporte un dispositif de conformation constitué d'une pluralité d'éléments gonflables entre le plan de rayonnement et le plan de masse.
- le plan rayonnant comporte une pluralité de lignes coaxiales colinéaires, chaque ligne intégrant une pluralité de dipôles constituant les antennes élémentaires dudit réseau, les lignes coaxiales étant de préférence maintenue parallèles les unes par rapport aux autres au moyen de traverses d'espacement.
- le plan de masse est un treillis comportant des fils métalliques, une maille du treillis présentant une dimension caractéristique égale 1/10 de la longueur d'onde associée à la fréquence de fonctionnement de l'antenne.
- l'antenne comporte un dispositif d'amarrage du plan antennaire, de préférence monté sur une plateforme, avantageusement mobile.
- l'antenne comporte un dispositif de mise en réserve du plan antennaire, comportant de préférence un système enrouleur pour le plan rayonnant et un système enrouleur pour le plan de masse.
- le plan antennaire présente, dans l'état déployé, une longueur supérieure à 10 fois la longueur d'onde associée à la fréquence de fonctionnement, une hauteur supérieure à 10 fois la longueur d'onde associée à la fréquence de fonctionnement et une épaisseur égale à un quart de la longueur d'onde associée à la fréquence de fonctionnement.
- l'antenne comporte une électronique d'émission/réception reliée au plan rayonnant et un système de mise à la terre connecté au plan de masse.

L'invention et ses avantages seront mieux compris à la lecture de la description détaillée qui va suivre d'un mode de réalisation particulier de l'invention, donné uniquement à titre d'exemple non limitatif, cette description étant faite en se référant aux dessins annexés sur lesquels :
- La figure 1 est une représentation schématique en perspective d'un premier mode de réalisation de l'antenne selon l'invention, le plan antennaire étant dans l'état déployé ;
- La figure 2 est une représentation schématique en vue de face du plan rayonnant du plan antennaire de l'antenne de la figure 1 ; et
- La figure 3 est une représentation schématique respectivement en vue de dessus et en vue de face, d'un second mode de réalisation, préféré, de l'antenne selon l'invention, le plan antennaire étant dans son état replié.

De manière générale, l'invention consiste en la réalisation d'une antenne dont le plan antennaire, portant le réseau d'antennes élémentaires, est orienté perpendiculairement à la surface terrestre, c'est-à-dire telle que la normale N au plan antennaire se trouve dans un plan horizontal XY (la direction Z étant la direction et la verticale géographique au point d'implantation de l'antenne), parallèle à la surface terrestre, ou tout au moins présente un faible angle d'élévation par rapport à ce plan horizontal.

La détection d'un aéronef se présentant avec un angle d'élévation faible par rapport au plan horizontal XY, angle d'élévation défini dans un plan vertical contenant la normale N au plan antennaire, conduit à un usage du radar équipé de l'antenne selon l'invention dans lequel la direction de pointage du digramme de rayonnement de l'antenne est proche de la normale au plan antennaire, c'est-à-dire de la direction de pointage optimale.

Il est ainsi possible de détecter des aéronefs dans un domaine en élévation et en gisement correspondant à un cône de demi-ouverture de +45° par rapport à la normale N au plan antennaire.

La partie utilisée du diagramme de rayonnement offrant de meilleures propriétés, la détection d'aéronefs est améliorée, rendant même possible la détection d'aéronefs furtifs ou d'aéronefs volant à basse altitude et masqués par des feuillages.

De plus, la détection d'un aéronef avec une faible élévation correspond, notamment, au cas d'un aéronef se trouvant encore à grande distance du point géographique d'implantation du plan antennaire. L'antenne selon l'invention présente donc une très longue portée par rapport à une antenne équivalente dont le réseau d'antennes élémentaires est disposé horizontalement.

Il est à souligner que les connaissances acquises sur les antennes radars basse fréquence dont le plan antennaire est positionné dans le plan parallèle à la surface terrestre s'appliquent aux antennes selon l'invention, dont le plan antennaire est perpendiculaire à la surface terrestre.

L'invention évite donc d'avoir à pointer dans des directions proches de la parallèle au plan antennaire pour la détection des aéronefs.

L'invention consiste donc à réaliser une antenne dont le réseau d'antennes élémentaires est placé dans un plan perpendiculaire au sol et non parallèle à celui-ci comme jusqu'alors réalisé pour les radars à basse fréquence de l'état de la technique.

Cependant, le basculement du plan antennaire n'est pas chose simple compte tenu notamment des grandes dimensions du réseau d'antennes élémentaires.

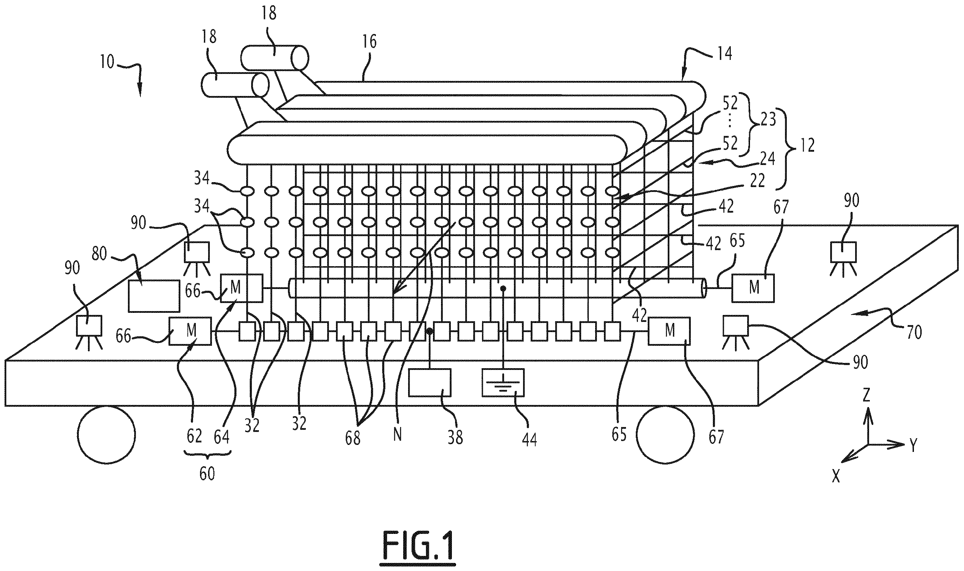

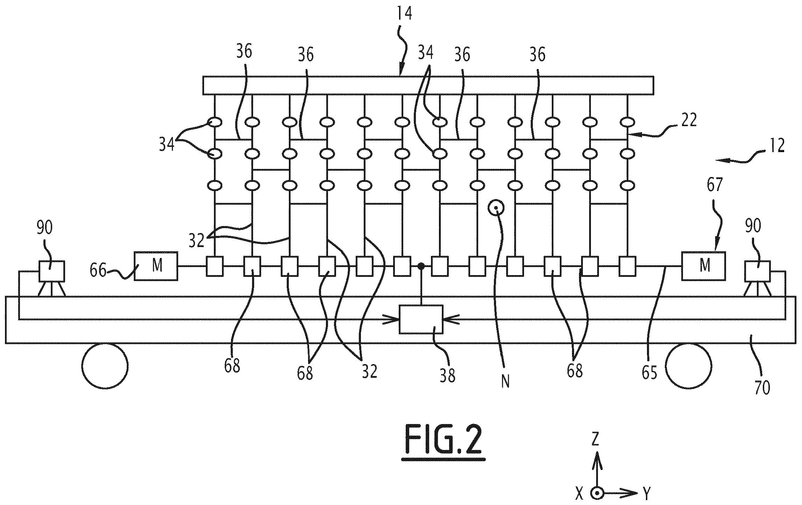

Dans ce qui suit un mode de réalisation préféré de l'antenne selon l'invention va être présenté en référence aux figures 1 et 2.

L'antenne radar 10 comporte un plan antennaire 12 de grandes dimensions, léger et souple, et un dispositif de sustentation 14 du plan antennaire.

Le plan antennaire 12 est constitué d'un plan rayonnant 22 et d'un plan de masse 24.

Le plan antennaire 22 est déployé depuis un état replié vers un état déployé.

Dans l'état déployé, représente sur les figures 1 et 2, le plan antennaire 12 adopte une conformation, qui, de manière optimale, est un parallélépipède rectangle dont une face avant est constituée par le plan rayonnant 22 et une face arrière est constituée par le plan de masse 24.

Ce parallélépipède optimal présente une longueur supérieure à 10 fois la longueur d'onde, une hauteur supérieure à 10 fois la longueur d'onde et une épaisseur égale à un quart de la longueur d'onde, la longueur d'onde étant celle de la fréquence de fonctionnement définie pour l'antenne radar 10.

Pour une fréquence de fonctionnement de 30 MHz (c'est-à-dire une longueur d'onde de 4 m), le plan antennaire 12 déployé présente par exemple une longueur de 100 m, une hauteur de 100 m et une épaisseur de 2,5 m.

Dans l'état déployé, le plan rayonnant 22 se trouve dans un plan sensiblement vertical. Le plan de masse 24 est situé parallèlement au plan rayonnant 22, à l'arrière de celui-ci. La normale N au plan rayonnant 22, orientée à l'écart du plan de masse 24, est alors sensiblement perpendiculaire au plan horizontal XY du sol ou de la mer où est positionnée l'antenne radar 10. La normale N est donc sensiblement horizontale.

### Dispositif de sustentation

Le dispositif de sustentation 14 a pour fonction d'élever le plan antennaire 12 dans l'air.

Le dispositif de sustentation 14 est un aéronef, c'est-à-dire tout objet aérien adapté : ballon captif ou libre, dirigeable, aéroplane, avion, hélicoptère, etc.

De préférence, l'aéronef est un aérostat captif, capable de s'élever et de se maintenir dans les airs. Il comprend un ballon 16 dont l'enveloppe est gonflée avec un gaz plus léger que l'air.

Le plan antennaire 12 est fixé, par les bords supérieurs du plan rayonnant 22 et du plan de masse 24, sous le ballon 16. Les bords inférieurs du plan rayonnant 22 et du plan de masse 24 étant amarrés au sol, l'aérostat est captif.

Le dispositif de sustentation 14 comporte avantageusement un système de propulsion 18, au moins pour compenser les effets du vent sur le plan antennaire 12, le vent ayant tendance non seulement à déformer (écart par rapport à la conformation optimale) le plan antennaire, mais également à l'incliner par rapport au plan vertical, puisque le plan antennaire 12 est amarré au sol (la normale N n'étant alors plus parallèle au sol).

Les dimensions du ballon 16 dépendent du gaz utilisé et de la masse du plan antennaire 12 à soulever. Par exemple, 1 m³ d'hélium permettant de soulever une masse de 1 kg, un ballon présentant une enveloppe de 100 m de long sur 2 m de large et 0,5 m d'épaisseur, soit de 100 m³, peut soulever une masse de l'ordre de 100 kg.

### Le plan rayonnant

Le plan rayonnant 22 (représenté sur la figure 2 sans le plan de masse 24) a pour fonction d'émettre ou de recevoir un signal électromagnétique.

Le plan rayonnant 22 est constitué d'une pluralité de lignes 32 disposées, dans l'état déployé, sensiblement verticalement.

Chaque ligne 32 est un câble coaxial du type coaxial-colinéaire, intégrant, dans sa longueur, une pluralité de dipôles rayonnant. Chaque dipôle 34 correspond à une antenne élémentaire du réseau de l'antenne radar 10. Par exemple, le coaxial-colinéaire utilisé est celui vendu sous la dénomination commerciale Glomex RA1225 par la société Glomex Leisure.

Les dipôles 34 sont disposés régulièrement le long de chaque ligne 32 avec un pas prédéfini correspondant à une moitié de longueur d'onde.

Les lignes 32 sont maintenue parallèlement les unes par rapport aux autres par des traverses d'espacement 36, représentées uniquement sur la figure 2 pour des raisons de lisibilité de la figure 1.

L'extrémité de gauche d'une traverse 36 est connectée à une ligne 32, tandis que son extrémité de droite est connectée à une ligne 32 voisine. Les traverses 36 permettent ainsi de fixer les lignes 32 ensemble et de conférer une certaine rigidité au plan rayonnant 22.

Avantageusement, le moyen de fixation d'une traverse 36 à une ligne 32 est du type fixation rapide, par exemple auto-agrippante. Une traverse 36 est montée de manière à être sensiblement perpendiculaire aux lignes verticales qu'elle relie.

Les traverses 36 sont installées au fur et à mesure du déploiement du plan rayonnant 22, alors que le dispositif de sustentation 14 est en configuration de vol et soulève la portion déjà déployée du plan antennaire.

La longueur d'une traverse d'espacement 36 est égale au pas entre dipôles, soit la moitié de la longueur d'onde.

Les dipôles 34 forment ainsi un réseau d'antennes élémentaires à maille carrée.

Le plan rayonnant 22 est connecté à une électronique d'émission/réception 38 propre, en émission, à générer et à adresser à chaque dipôle 34 un signal d'émission adapté et, en réception, à recevoir les signaux provenant de chacun des dipôles 34.

Le plan rayonnant 22 est fixé, par son bord supérieur, au dispositif de sustentation 14, par exemple au moyen d'une bande auto-agrippante.

Le plan rayonnant 22 est fixé, par son bord inférieur, à un dispositif d'amarrage décrit ci-dessous en détail.

### Le plan de masse

Le plan de masse 24 sert de référence au plan antennaire 12.

Le plan de masse 24 comporte un treillis de fils métallique 42, par exemple en cuivre. Ces fils métallique 42 sont tressés. En variante, ils sont intégrés dans un matériau structuré de type méta-matériau.

La maille du treillis, par exemple carrée, présente une dimension caractéristique égale au 1/10 de la longueur d'onde de la fréquence de fonctionnement de l'antenne.

Le plan de masse 24 est connecté à la terre par un système 44 de mise à la terre adapté.

Le plan de masse 24 constitue une surface à haute impédance. Le plan de masse 24 est fixé, par son bord supérieur, au dispositif de sustentation 14, par exemple par une bande auto-agrippante.

Le plan de masse 24 est fixé, par son bord inférieur, à un dispositif d'amarrage décrit en détail ci-dessous.

### Dispositif de conformation

Le plan antennaire 12 comporte un dispositif de conformation 23 permettant de conférer au plan antennaire 12 déployé la forme parallélépipédique optimale et de maintenir cette conformation au cours de l'utilisation de l'antenne radar 10, en limitant notamment les déformations du plan antennaire 12 causées par le vent.

Dans le mode de réalisation de la figure 1, le dispositif de conformation 23 comporte un ensemble de traverses d'espacement 52. L'extrémité arrière d'une traverse 52 est connectée au plan de masse 24, tandis que son extrémité avant est connectée au plan rayonnant 22. Les traverses 52 permettent ainsi de fixer le plan de masse 24 au plan de rayonnement 24 et de conférer une certaine rigidité au plan antennaire 12. Sur la figure 1, seules les traverses d'espacement 52 à l'extrémité gauche du plan antennaire sont représentées, mais des traverses d'espacement sont prévues régulièrement le long de toute la longueur et de toute la hauteur du plan antennaire.

Avantageusement, la fixation d'une traverse 52 au plan rayonnant ou au plan de masse est du type fixation rapide, par exemple auto-agrippante. Une traverse 52 est montée de manière à être sensiblement perpendiculaire à la fois au plan de masse 24 et au plan rayonnant 22.

Les traverses 52 sont installées au fur et à mesure du déploiement du plan de masse 24 et du plan rayonnant 22, alors que le dispositif de sustentation 14 est en configuration de vol et soulève la portion déjà déployée du plan antennaire.

Les traverses 52 présentent une longueur identique entre elles, de manière à maintenir un écartement prédéfini entre le plan de masse 24 et le plan rayonnant 22 sur toute l'étendue du plan antennaire 12 et lui conférer une certaine rigidité.

La longueur d'une traverse 52 est égale à un quart de longueur d'onde rayonnée.

La longueur d'une traverse est donc de 2,5 m pour une onde de fréquence 30 MHz.

Il est à noter que l'antenne ne fonctionne alors pas, en réception ou en émission, pour une onde de fréquence 60 MHz, car l'écartement de 2,5 m entre le plan rayonnant 22 et le plan de masse 24 correspond alors à la moitié de la longueur d'onde. Plus généralement, l'antenne fonctionne pour une onde de fréquence multiple du quart de la longueur d'onde associée à la fréquence de fonctionnement prédéfinie de l'antenne et ne fonctionne pas pour un multiple de la moitié de la longueur d'onde associée à la fréquence de fonctionnement prédéfinie de l'antenne.

### Dispositif d'amarrage

L'antenne radar 10 comporte un dispositif d'amarrage 60.

Le plan antennaire 12 est amarré au sol, le long du bord inférieur du plan de masse 24 et du bord inférieur du plan rayonnant 22. Le dispositif de sustentation 14 est donc captif via le plan antennaire 12.

Dans le mode de réalisation représenté sur les figures, le dispositif d'amarrage 60 comporte un dispositif de mise en réserve du plan antennaire comportant un système d'enroulement du plan de masse 64 et un système d'enroulement du plan rayonnant 62.

Un système d'enroulement comporte un arbre 65, parallèle au bord inférieur du plan de rayonnement ou de masse. Chaque extrémité de l'arbre 65 est couplée à un moteur 66, 67.

Les moteurs 66 et 67, synchronisés, sont propres à entraîner l'arbre 65 en rotation dans un sens ou dans l'autre, en fonction d'une commande d'actionnement adaptée, de manière à dérouler ou à enrouler le plan rayonnant ou le plan de masse.

Des enrouleurs 68 sont montés régulièrement le long de l'arbre 65 du système d'enroulement du plan rayonnant 62. Chaque enrouleur 68 est associé à une ligne 32.

De préférence, le dispositif d'amarrage est installé sur une plateforme mobile 70. Elle est par exemple déplacée par un véhicule tracteur (non représenté). Cela permet d'amener l'antenne radar 10 dans l'état replié sur un lieu d'installation, puis d'orienter la normale N au plan antennaire (perpendiculaire à la direction des arbres 35), en fonction d'une direction de détection d'intérêt et/ou de la direction du vent, avant de déployer l'antenne.

Avantageusement, la plateforme mobile 70 comporte un dispositif 80 de stockage du dispositif de sustentation 14, représenté schématiquement sur les figures 1 et 2, comportant notamment un système d'injection et de récupération du gaz utilisé par le dispositif de sustentation.

Avantageusement, l'antenne radar 10 comporte un dispositif 90 de mesure de la déformation spatiale instantanée du plan antennaire 12 dans l'état déployé par rapport à la conformation parallélépipédique optimale. De la sorte, il est possible de compenser la déformation instantanée du plan antennaire en adaptant en temps réel la consigne de pointage appliqués à chaque dipôles 34, pour piloter l'orientation de la direction de pointage de l'antenne par rapport à la normale N au plan de rayonnement 22.

La mesure de la position spatiale du plan antennaire s'effectue en mettant en oeuvre une méthode conventionnelle ou une combinaison de méthodes conventionnelles : trièdre d'opportunité, mesure optique, laser altimètre, mesure de position par rapport à une constellation de satellites (GPS, GNSS), mesure haute fréquence, mesure de force sur les enrouleurs, etc.

### Utilisation

La plateforme 70, avec le plan antennaire 12 replié et l'aérostat 14 stocké, est déplacée vers le lieu de déploiement de l'antenne.

Une fois en ce lieu, la plateforme 70 est orientée par rapport au vent et à une direction de détection d'intérêt pour que, une fois déployé, le plan antennaire autorise une détection efficace.

Le ballon 16 de l'aérostat 14 est gonflé en y injectant du gaz depuis le système de stockage 80 présent sur la plateforme 70.

Une fois le ballon gonflé, les bords supérieurs du plan rayonnant 22 et du plan de masse 24 sont fixés au-dessous du ballon 16.

Puis, le plan antennaire 12 est déployé par mise en rotation synchrone des arbres 35 des systèmes d'enroulement 62 et 64, autour desquels sont enroulés le plan de masse 24 et le plan rayonnant 22.

Des traverses 52 et des traverses 36 d'espacement sont installées au fur et à mesure du déploiement des plans 22 et 24.

L'actionnement des paires de moteurs 66 et 67 du dispositif de mise en réserve est stoppé, lorsque la hauteur du plan antennaire 12 est jugée suffisante, compte tenu de la force du vent et de la capacité de détection de l'antenne déployée.

Une fois le plan antennaire 12 dans l'état déployé, l'électronique d'émission/réception 38 est reliée au plan rayonnant et le dispositif de mise à la terre 44 est connecté au plan de masse.

Au cours de l'utilisation, les moyens de propulsion 18 du dispositif de sustentation sont actionnés pour maintenir le plan antennaire le plus verticalement possible. Le dispositif 90 est utilisé pour mesurer la déformation par rapport à la conformation parallélépipédique optimale et en tenir compte pour la formation du digramme d'émission/réception produit par le réseau d'antennes élémentaires.

Une description équivalente pourrait être faite pour décrire le repliement du plan antennaire, le stockage de l'aérostat (en refoulant le gaz du ballon dans les moyens de stockage), puis le déplacement de la plateforme vers un autre lieu d'utilisation de l'antenne.

### Variantes de réalisation

En variante, l'aéronef du dispositif de sustentation est constitué par un ou plusieurs drones dont les vols sont synchronisés pour maintenir au mieux le plan antennaire dans sa configuration optimale.

La conformation optimale peut-être différente du parallélépipède du mode de réalisation préférentiel ci-dessus.

Dans encore une autre variante, indépendante des précédentes, le dispositif d'amarrage est un simple dispositif permettant de fixer le plan antennaire sur une paroi ou une structure verticale (falaises, bâtiments piles de ponts, entre bâtiments,...) Eventuellement, dans cette variante, l'utilisation d'un dispositif de sustentation n'est pas nécessaire.

En variante, le dispositif de conformation comporte une pluralité d'éléments gonflables, formant, dans l'état gonflé, des poches préférablement parallélépipédiques rectangles et avantageusement en contact mutuel de manière à constituer, à l'image d'un mur de briques, un plan vertical présentant une certaine rigidité.

Une face avant de chaque élément gonflable constitue une portion du plan rayonnant et une face arrière de chaque élément gonflable constitue une portion du plan de masse. Les dipôles du plan rayonnant et le treillis du plan de masse sont respectivement solidaires des faces avant et arrière des éléments gonflables. Par exemple, un dipôle du plan rayonnant est fixé au centre de la face avant de chaque élément gonflable.

Ces éléments gonflables constituent avantageusement tout ou partie du dispositif de sustentation : ils viennent en complément d'un ballon de sustentation, qui peut par conséquent être de plus petite taille ; ou ils viennent en remplacement d'un tel ballon de sustentation. Dans ce dernier cas, le dispositif de sustentation est en fait intégré au plan antennaire entre les plans de rayonnement et de masse.

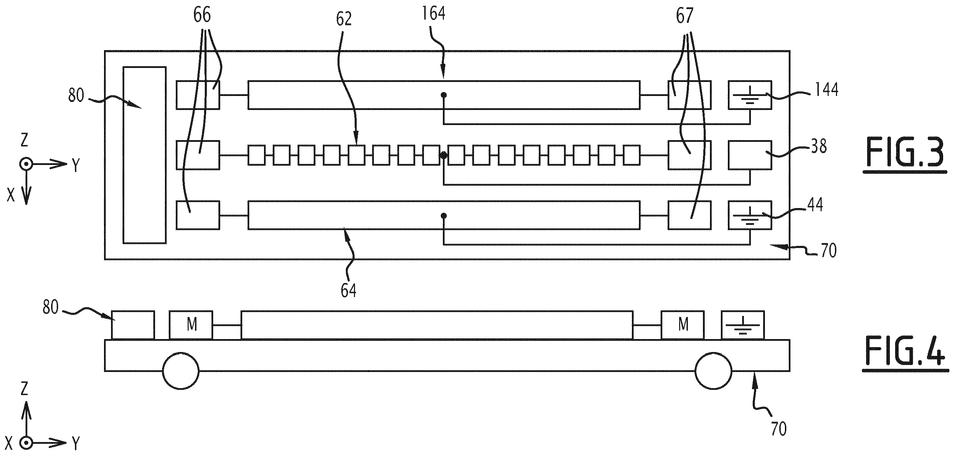

En variante, comme représenté sur les figures 3 et 4, la plateforme 70 est munie d'un système 62 d'enroulement du plan rayonnant disposé entre un premier système 64 d'enroulement d'un premier plan de masse et d'un second système 164 d'enroulement d'un second plan de masse. Les systèmes d'enroulement sont similaires à ceux décrits ci-dessus. En particulier, les premier et second plans de masse sont indépendants et connectés à la terre par des systèmes de mise à la terre indépendants 44 et 144. Le déploiement du plan rayonnant est alors effectué soit avec le premier plan de masse soit avec le second plan de masse de manière à orienter la normale N dans un sens ou dans l'autre selon la direction X, étant fixé la position de la plateforme 70. Une fois la plateforme 70 mis en place, il est ainsi possible de choisir le sens de la normale au plan antennaire.

Il est à noter que la conformation du plan rayonnant selon l'invention manque de précision, puisqu'il est par exemple souple ou conformé par des éléments gonflables. En conséquence l'antenne est dédiée aux fréquences basses.

## Revendications

1. Antenne radar (10) basse fréquence, comportant un réseau d'antennes élémentaires, propre à fonctionner à une fréquence de fonctionnement prédéfinie, **caractérisée en ce qu'**elle comporte un plan antennaire (12), le plan antennaire comportant un plan rayonnant (22) et un plan de masse (24), le plan rayonnant portant le réseau d'antennes élémentaires (34), le plan antennaire pouvant être déployé depuis un état replié vers un état déployé, dans lequel il adopte une conformation sensiblement perpendiculaire à la surface terrestre du sol ou de la mer,
**en ce qu'**elle comporte un dispositif de mise en réserve du plan antennaire, comportant un système enrouleur (62) pour le plan rayonnant (22) et un système enrouleur (64) pour le plan de masse (24), le plan antennaire étant souple pour pouvoir être enroulé dans l'état replié,
et **en ce qu'**elle comporte un dispositif de sustentation (14) du type aérostat propre à soulever le plan antennaire (12) de façon à le maintenir dans l'état déployé, le plan antennaire étant léger pour pouvoir être soulevé par le dispositif de sustentation.

2. Antenne radar (10) selon la revendication 1, comportant un dispositif de conformation (23) propre à conférer au plan antennaire (12) dans son état déployé une conformation optimale.

3. Antenne radar (10) selon la revendication 2, comportant un dispositif (90) de mesure d'une déformation spatiale du plan antennaire (12) par rapport à ladite conformation optimale, ladite déformation étant compensée lors de la génération d'une consigne de pointage d'un diagramme d'émission/réception de l'antenne.

4. Antenne radar (10) selon la revendication 2 ou la revendication 3, dans laquelle le dispositif de conformation (23) comporte une pluralité de traverses d'espacement (52) entre le plan rayonnant (22) et le plan de masse (24), lesdites traverses d'espacement étant de préférence à fixation rapide.

5. Antenne radar (10) selon l'une quelconque des revendications précédentes, dans lequel le plan de masse est situé parallèlement au plan rayonnant, à l'arrière de celui-ci, dans l'état déployé du plan antennaire.

6. Antenne radar (10) selon l'une quelconque des revendications 1 à 5, dans laquelle le dispositif de sustentation (14) comporte un moyen de propulsion (18), pour compenser un effet du vent sur le plan antennaire.

7. Antenne radar (10) selon l'une quelconque des revendications 1 à 6, dans laquelle l'antenne radar comporte en outre un dispositif (80) de stockage de l'aérostat (14), comportant de préférence un système d'injection et de récupération du gaz utilisé pour gonfler une enveloppe de l'aérostat.

8. Antenne radar (10) selon l'une quelconque des revendications précédentes, comportant un dispositif de conformation constitué d'une pluralité d'éléments gonflables entre le plan de rayonnement et le plan de masse.

9. Antenne radar (10) selon l'une quelconque des revendications précédentes, dans laquelle le plan rayonnant (22) comporte une pluralité de lignes (32) coaxiales colinéaires, chaque ligne intégrant une pluralité de dipôles (34) constituant les antennes élémentaires dudit réseau, les lignes coaxiales étant de préférence maintenue parallèles les unes par rapport aux autres au moyen de traverses d'espacement (36).

10. Antenne radar (10) selon l'une quelconque des revendications précédentes, dans laquelle le plan de masse (24) est un treillis comportant des fils métalliques, une maille du treillis présentant une dimension caractéristique égale 1/10 de la longueur d'onde associée à la fréquence de fonctionnement de l'antenne.

11. Antenne radar (10) selon l'une quelconque des revendications précédentes, comportant un dispositif (60) d'amarrage du plan antennaire (12), de préférence monté sur une plateforme (70), avantageusement mobile.

12. Antenne radar (10) selon l'une quelconque des revendications précédentes, le plan antennaire (12) présentant, dans l'état déployé, une longueur supérieure à 10 fois la longueur d'onde associée à la fréquence de fonctionnement, une hauteur supérieure à 10 fois la longueur d'onde associée à la fréquence de fonctionnement et une épaisseur égale à un quart de la longueur d'onde associée à la fréquence de fonctionnement.

13. Antenne radar (10) selon l'une quelconque des revendications précédentes, comportant une électronique d'émission/réception (38) reliée au plan rayonnant et un système de mise à la terre (44) connecté au plan de masse.

## Patentansprüche

1. Niedrigfrequenz-Radarantenne (10), aufweisend ein Netzwerk elementarer Antennen, die geeignet ist, in einer vorbestimmten Betriebsfrequenz zu arbeiten, **dadurch gekennzeichnet, dass** sie eine Antennenebene (12) aufweist, wobei die Antennenebene eine Strahlungsebene (22) und eine Masseebene (24) aufweist, wobei die Strahlungsebene das Netzwerk elementarer Antennen (34) trägt, wobei die Antennenebene aus einem gefalteten Zustand in einen entfalteten Zustand entfaltet werden kann, in dem sie eine Konformation annimmt, die im Wesentlichen senkrecht zur Erdoberfläche des Bodens oder des Meeres verläuft,
dass sie eine Vorrichtung zur Reservebildung der Antennenebene aufweist, die ein Wickelsystem (62) für die Strahlungsebene (22) und ein Wickelsystem (64) für die Masseebene (24) umfasst, wobei die Antennenebene flexibel ist, um im gefalteten Zustand aufgewickelt werden zu können,
und dass sie eine Auftriebsvorrichtung (14) vom Typ Aerostat aufweist, die geeignet ist, die Antennenebene (12) derart anzuheben, dass sie im entfalteten Zustand gehalten wird, wobei die Antennenebene leicht ist, um von der Auftriebsvorrichtung angehoben werden zu können.

2. Radarantenne (10) nach Anspruch 1, aufweisend eine Konformationsvorrichtung (23), die geeignet ist, der Antennenebene (12) in ihrem entfalteten Zustand eine optimale Konformation zu verleihen.

3. Radarantenne (10) nach Anspruch 2, aufweisend eine Vorrichtung (90) zum Messen einer räumlichen Verformung der Antennenebene (12) in Bezug auf die optimale Konformation, wobei die Verformung bei der Erzeugung einer Anweisung zum Ausrichten eines Sende-/Empfangsdiagramms der Antenne kompensiert wird.

4. Radarantenne (10) nach Anspruch 2 oder 3, wobei die Konformationsvorrichtung (23) eine Vielzahl von Abstandshaltern (52) zwischen der Strahlungsebene (22) und der Masseebene (24) aufweist, wobei die Abstandshalter vorzugsweise schnell zu befestigen sind.

5. Radarantenne (10) nach einem der vorhergehenden Ansprüche, wobei die Masseebene im entfalteten Zustand der Antennenebene parallel zur Strahlungsebene hinter dieser angeordnet ist.

6. Radarantenne (10) nach einem der Ansprüche 1 bis 5, wobei die Auftriebsvorrichtung (14) ein Antriebsmittel (18) umfasst, um einen Windeffekt auf die Antennenebene zu kompensieren.

7. Radarantenne (10) nach einem der Ansprüche 1 bis 6, wobei die Radarantenne ferner eine Vorrichtung (80) zur Lagerung des Aerostats (14) aufweist, die vorzugsweise ein System zur Einleitung und Rückgewinnung des Gases aufweist, das zum Aufblasen einer Hülle des Aerostats verwendet wird.

8. Radarantenne (10) nach einem der vorhergehenden Ansprüche, aufweisend eine Konformationsvorrichtung, die aus einer Vielzahl von aufblasbaren Elementen zwischen der Strahlungsebene und der Masseebene besteht.

9. Radarantenne (10) nach einem der vorhergehenden Ansprüche, wobei die Strahlungsebene (22) eine Vielzahl von kolinearen Koaxialleitungen (32) umfasst, wobei jede Leitung eine Vielzahl von Dipolen (34) integriert, die die elementaren Antennen des Netzwerks bilden, wobei die Koaxialleitungen vorzugsweise mittels Abstandshaltern (36) parallel zueinander gehalten werden.

10. Radarantenne (10) nach einem der vorhergehenden Ansprüche, wobei die Masseebene (24) ein Gitter ist, das Metalldrähte aufweist, wobei eine Masche des Gitters eine charakteristische Abmessung aufweist, die gleich 1/10 der Wellenlänge ist, die mit der Betriebsfrequenz der Antenne verbunden ist.

11. Radarantenne (10) nach einem der vorhergehenden Ansprüche, aufweisend eine Vorrichtung (60) zum Andocken der Antennenebene (12), die vorzugsweise auf einer Plattform (70) angebracht ist, die vorteilhafterweise beweglich ist.

12. Radarantenne (10) nach einem der vorhergehenden Ansprüche, wobei die Antennenebene (12) im entfalteten Zustand eine Länge aufweist, die größer als das 10-fache der mit der Betriebsfrequenz verbundenen Wellenlänge ist, und eine Höhe, die größer als das 10-fache der mit der Betriebsfrequenz verbundenen Wellenlänge ist, und eine Dicke, die gleich einem Viertel der mit der Betriebsfrequenz verbundenen Wellenlänge ist.

13. Radarantenne (10) nach einem der vorhergehenden Ansprüche, aufweisend eine Sende-/Empfangselektronik (38), die mit der Strahlungsebene verbunden ist, und ein Erdungssystem (44), das mit der Masseebene verbunden ist.

## Claims

1. Low-frequency radar antenna (10), comprising an array of elementary antennas, capable of operating at a predefined operating frequency, **characterised in that** it comprises an antenna plane (12), the antenna plane comprising a radiating plane (22) and a ground plane (24), the radiating plane carrying the array of elementary antennas (34), the antenna plane being able to be deployed from a folded state to a deployed state, in which it adopts a configuration substantially perpendicular to the terrestrial surface of the ground or sea,
**in that** it comprises a device for storing the antenna plane, comprising a winding system (62) for the radiating plane (22) and a winding system (64) for the ground plane (24), the antenna plane being flexible so that it can be wound in the folded state,
and **in that** it comprises a lifting device (14) of the aerostat type capable of lifting the antennae plane (12) so as to hold it in the deployed state, the antennae plane being light so that it can be lifted by the lifting device.

2. Radar antenna (10) as claimed in claim 1, comprising a shaping device (23) capable of giving the antenna plane (12) optimum shaping in its deployed state.

3. Radar antenna (10) according to claim 2, comprising a device (90) for measuring a spatial deformation of the antenna plane (12) with respect to the said optimal conformation, the said deformation being compensated for when generating a pointing instruction for a transmit/receive pattern of the antenna.

4. Radar antenna (10) according to claim 2 or claim 3, in which the configuration device (23) comprises a multitude of spacer crosspieces (52) between the radiating plane (22) and the ground plane (24), said spacer crosspieces preferably being quick-fitting.

5. Radar antenna (10) according to any of the preceding claims, in which the ground plane is located parallel to the radiating plane, to the rear thereof, in the deployed state of the antenna plane.

6. Radar antenna (10) according to any one of claims 1 to 5, in which the lift device (14) comprises a propulsion means (18) to compensate for an effect of the wind on the antenna plane.

7. Radar antenna (10) according to any one of claims 1 to 6, in which the radar antenna also comprises a device (80) for storing the aerostat (14), preferably comprising a system for injecting and recovering the gas used to inflate an envelope of the aerostat.

8. Radar antenna (10) according to any of the preceding claims, comprising a shaping device consisting of a multitude of inflatable elements between the radiation plane and the ground plane.

9. Radar antenna (10) according to any one of the preceding claims, in which the radiating plane (22) comprises a multitude of collinear coaxial lines (32), each line integrating a multitude of dipoles (34) constituting the elementary antennas of the said array, the coaxial lines preferably being held parallel to one another by means of spacer crosspieces (36).

10. Radar antenna (10) according to any of the preceding claims, in which the ground plane (24) is a trellis comprising metal wires, a mesh of the trellis having a characteristic dimension equal to 1/10 of the wavelength associated with the operating frequency of the antenna.

11. Radar antenna (10) according to any one of the preceding claims, comprising a device (60) for docking the antenna plane (12), preferably mounted on a advantageously mobile platform (70).

12. Radar antenna (10) according to any one of the preceding claims, the antenna plane (12) having, in the deployed state, a length greater than 10 times the wavelength associated with the operating frequency, a height greater than 10 times the wavelength associated with the operating frequency and a thickness equal to a quarter of the wavelength associated with the operating frequency.

13. Radar antenna (10) according to any one of the preceding claims, comprising transmit/receive electronics (38) connected to the radiating plane and an earthing system (44) connected to the ground plane.
